# EUROPÄISCHE PATENTSCHRIFT

(11) **EP 3 456 531 B1**
(45) Veröffentlichungstag und Bekanntmachung des Hinweises auf die Patenterteilung: **04.11.2020**
(21) Anmeldenummer: 17191495.5
(22) Anmeldetag: 15.09.2017
(51) Int. Cl.: B32B 5/18, B32B 15/04, B32B 27/06, B32B 3/26, B32B 3/30

(54) **VERSTÄRKUNGSSTRUKTUR AUS FLÄCHENHAFTEM, ZELLULÄREM BASISMATERIAL UND VERFAHREN ZUR HERSTELLUNG EINER DREIDIMENSIONAL VERFORMBAREN, FLÄCHENHAFTEN VERSTÄRKUNGSSTRUKTUR**
REINFORCEMENT STRUCTURE MADE OF FLAT, CELLULAR BASE MATERIAL AND METHOD FOR FABRICATING A THREE DIMENSIONAL DEFORMABLE, FLAT REINFORCING STRUCTURE
STRUCTURE DE RENFORCEMENT EN MATÉRIEL DE BASE CELLULAIRE PRÉSENTANT DES SURFACES ET PROCÉDÉ DE FABRICATION D'UNE STRUCTURE DE RENFORCEMENT TRIDIMENSIONNELLE, DÉFORMABLE, PRÉSENTANT DES SURFACES

(43) Veröffentlichungstag der Anmeldung: 20.03.2019
(73) Patentinhaber: 3D | Core GmbH & Co. KG, 32051 Herford (DE)
(72) Erfinder: Streuber, Fritz M., 5020 Salzburg (AT)
(74) Vertreter: SSM Sandmair

(56) Entgegenhaltungen:
- EP-B1- 2 217 436
- WO-A2-98/10919
- DE-T2- 69 129 972

## Beschreibung

Die Erfindung betrifft eine dreidimensional verformbare, flächenhafte Verstärkungsstruktur und ein Verfahren zur Herstellung einer dreidimensional verformbaren, flächenhaften Verstärkungsstruktur aus einem flächenhaften Halbzeug eines zellulären Basismaterials. Das Basismaterial kann insbesondere ein mit eingebetteten Strukturen verstärkter oder auch ein unverstärkter geschäumter Kunststoff sein. Die Erfindung betrifft ferner die Verwendung der Verstärkungsstruktur zur Herstellung eines Verbundwerkstoffs, eines Composites, für den die Verstärkungsstruktur als Kernwerkstoff dient.

Aus der WO 98/10919 A2 und der EP 2 217 436 B1 sind zelluläre Verstärkungsstrukturen und deren Verwendung als Kernwerkstoffe von Compositen bekannt. Die Verstärkungsstrukturen werden für die Herstellung von leichten, aber dennoch steifen Compositen in Sandwichbauweise zwischen Deckschichten des jeweiligen Composites angeordnet. Die Verstärkungsstrukturen dienen als Abstandshalter für die Deckschichten und erhöhen die Biege- und Beulsteifigkeit der Composite. Um die Deckschichten eines Composites, zwischen denen eine Verstärkungsstruktur eingelegt ist, mittels einer Verbindungsmasse fest miteinander verbinden zu können, beispielsweise mittels eines Klebstoffs oder Kunstharzes, wird eine wabenförmige Verstärkungsstruktur mit hexagonalen Materialinseln und diese miteinander verbindenden dünnen Stegen verwendet. Die Verbindungsmasse durchdringt die zwischen den Materialinseln im Bereich der Stege vorhandenen Kavitäten der Verstärkungsstruktur, so dass zumindest im Bereich der Kavitäten ein Stoffschluss mit den Deckschichten gewährleistet ist. Die Strukturierung in Materialinseln und Verbindungsstege verleiht der Verstärkungsstruktur eine Flexibilität, wie sie für die Herstellung dreidimensional verformter Composite benötigt wird.

In der Praxis haben sich die aus der EP 2 217 436 B1 bekannten Verfahren bewährt, mit denen die Kavitationen oder Materialschwächungen anderer Art in hoher Präzision, aber dennoch wirtschaftlich erzeugt werden. Danach werden die Materialschwächungen mit einem Trennwerkzeug, an dem eine Vielzahl von Trennelementen angeordnet ist, in ein flächenhaftes Halbzeug des Basismaterials eingearbeitet. Der Feinheit der Strukturierung sind jedoch wegen der Anordnung der Trennelemente an einem gemeinsamen Träger und/oder der Sprödigkeit des zellulären Basismaterials Grenzen gesetzt.

Aus der WO 98/10919 ist ein Laminat bekannt, mit einer Kernschicht, die aus wabenförmigen Materialinseln besteht, die durch Materialschwächungen voneinander getrennt, untereinander aber mittels Materialstegen verbunden sind. Die DE 691 29 972 T2 betrifft ein Kernmaterial für Schichtstoffe, sowie ein Verfahren zu dessen Herstellung. Das Kernmaterial ist durch Materialschwächungen in Form von orthogonal zueinander verlaufende Nuten in zahlreich rechteckige Materialinseln unterteilt. Das Verfahren umfasst das Einbringen einer ersten Nut auf einer ersten Seite des Kernmaterials, das Aufbringen einer Folie auf die erste Seite, das Einbringen einer zweiten Nut in die gegenüberliegende Seite des Kernmaterials, wobei die ersten Nuten mit den zweiten Nuten verbunden sind.

Es ist eine Aufgabe der Erfindung, Verstärkungsstrukturen der genannten Art im Hinblick auf Ihre Flexibilität, d. h. der dreidimensionalen Verwölbbarkeit, zu verbessern und/oder die Herstellung von flexiblen Verstärkungsstrukturen der genannten Art auch aus vergleichsweise sprödem Basismaterial zu ermöglichen.

Die Erfindung geht von einer dreidimensional verformbaren, flächenhaften Verstärkungsstruktur aus einem zellulären Basismaterial aus. Die Verstärkungsstruktur weist in einer Draufsicht über ihre Fläche verteilt Materialschwächungen auf, die als Vertiefungen, wie etwa Rillen, oder insbesondere als Durchgangsschlitze gebildet sein können. Die Materialschwächungen strukturieren das zelluläre Basismaterial und somit die Verstärkungsstruktur in eine Vielzahl von durch die Materialschwächungen voneinander abgegrenzten, aber noch miteinander verbundenen Materialinseln. Die Materialinseln sind in der Draufsicht gesehen konvexe Polygone, vorzugsweise regelmäßige Polygone. Sie weisen bevorzugt jeweils die gleiche Form und Größe auf. Das Gleiche gilt bevorzugterweise für die Materialschwächungen.

Nach der Erfindung bilden jeweils mehrere der Materialinseln gemeinsam, gruppenweise, zusammengesetzte konvexe Polygone. Die Materialinseln bilden mit den sie voneinander trennenden Materialschwächungen und den sie miteinander verbindenden Materialbereichen des Basismaterials eine Feinstruktur, der eine Überstruktur in Form der größeren, aus jeweils mehreren Materialinseln zusammengesetzten Polygonen überlagert ist.

Die Materialinseln der Feinstruktur in der Draufsicht sind jeweils Rhomben oder stattdessen Dreiecke. In Modifikationen können mehrere der
Materialinseln auch jeweils als Rhombus und die verbleibenden Materialinseln jeweils als Dreieck geformt sein. Soweit die Materialinseln in der Draufsicht als Dreiecke gebildet sind, handelt es sich um gleichseitige Dreiecke. Rhomben sind von Hause aus gleichseitig. Die Rhomben und/oder Dreiecke bilden in derartigen Ausführungen gruppenweise jeweils reguläre Hexagone, als die zusammengesetzten Polygone.

Die Erfindung hat auch ein Verfahren zum Herstellen einer dreidimensional verformbaren, flächenhaften Verstärkungsstruktur zum Gegenstand, bei dem in ein flächenhaftes, zelluläres Basismaterial über die Fläche des Basismaterials verteilt Materialschwächungen eingearbeitet werden, die das Basismaterial in eine Vielzahl von Materialinseln unterteilen, die durch die Materialschwächungen voneinander abgegrenzt, aber dennoch miteinander verbunden sind. Die Materialinseln werden von dem zellulären Basismaterial gebildet. Die Materialschwächungen werden vorzugsweise regelmäßig verteilt eingearbeitet, so dass eine entsprechend regelmäßige Verteilung der Materialinseln und somit Strukturierung der Verstärkungsstruktur erhalten wird. Die Materialinseln sind in einer Draufsicht auf die Verstärkungsstruktur gesehen konvexe Polygone, vorzugsweise reguläre, d. h. gleichseitige Polygone. Bevorzugt handelt es sich um Rhomben und/oder Dreiecke.

Beim erfindungsgemäßen Verfahren werden die Materialinseln in mehreren, vorzugsweise gleichen Trennprozessen nicht alle gleichzeitig, sondern sequentiell in Gruppen von jeweils mehreren Materialschwächungen eingearbeitet. So wird in einem ersten Trennprozess eine erste Gruppe der Materialschwächungen mit Trennelementen eingearbeitet, die an einem Träger des ersten Trennwerkzeugs so angeordnet sind, dass im ersten Prozess erste Materialinseln erhalten werden. In einem weiteren, zweiten Trennprozess wird eine zweite Gruppe der Materialschwächungen entweder mit dem gleichen Werkzeug oder mit einem weiteren, zweiten Trennwerkzeug eingearbeitet, das Trennelemente aufweist, die an einem Träger des zweiten Werkzeugs wie die Trennelemente des ersten Werkzeugs angeordnet sind. Die Trennelemente des zweiten Werkzeugs können der Form nach mit dem Trennelementen des ersten Werkzeugs identisch sein. Jedenfalls sind sie der geometrischen Anordnung nach wie die Trennelemente des ersten Werkzeugs am Träger des zweiten Werkzeugs angeordnet. Die Gleichheit der beiden Trennwerkzeuge geht vorteilhafterweise so weit, dass bei Vertauschung der Reihenfolge der beiden Trennprozesse, wenn also der zweite Trennprozess in einem modifizierten Verfahren vor dem ersten Trennprozess ausgeführt wird, nach der Durchführung der beiden Trennprozess das gleiche Produkt erhalten wird. In dem unmittelbar oder nach Zwischenschritten auf den ersten Trennprozess folgenden zweiten Trennprozess werden die im ersten Trennprozess eingearbeiteten ersten Materialinseln in zweite Materialinseln unterteilt. Die zweiten Materialinseln bilden in der Draufsicht jeweils ein konvexes Polygon. Bilden die zweiten Materialinseln ein gleichseitiges Dreieck, können insbesondere jeweils zwei zweite Materialinseln zusammen einen Rhombus bilden.

Bei dem Einarbeiten sind das erste Trennwerkzeug und das zweite Trennwerkzeug in Bezug auf das zu bearbeitende Basismaterial relativ zueinander axial in eine Richtung versetzt und/oder relativ zueinander verdreht, so dass zumindest eine Untermenge der zweiten Gruppe der Materialschwächungen von zumindest einer Untermenge der ersten Gruppe der Materialschwächungen einen Abstand bzw. Versatz aufweist, so dass im zweiten Trennprozess Materialschwächungen zusätzlich zu den im ersten Trennprozess eingearbeiteten Materialschwächungen erhalten werden.

Aufgrund der erfindungsgemäßen Strukturierung in Form der von den Materialinseln gebildeten Feinstrukturierung und der überlagerten Überstruktur kann eine beim zellulären Basismaterial von Hause aus vorhandene Anisotropie in Bezug auf mechanische Festigkeiten, wie etwa die Druckfestigkeit und die Schubfestigkeit, kompensiert werden. Eine angepasste Wahl der Polygonform der Materialinseln der Feinstruktur und der Polygonform der Überstruktur ermöglicht die Herstellung vorteilhaft kleiner Materialinseln und somit eine vergleichsweise feine Strukturierung der Verstärkungsstruktur in wenigen Verfahrensschritten. Von Vorteil ist auch, dass das physisch gleiche Werkzeug oder mehrere gleiche Werkzeuge sequentiell in jeweils einem eigenen Verfahrensschritt zum Einarbeiten der Materialschwächungen verwendet werden kann oder können. Durch das sequentielle Einarbeiten werden die im jeweiligen Schritt auf das zelluläre Basismaterial wirkende Belastung und damit die Gefahr von Brüchen oder Rissbildung insbesondere bei sprödem Basismaterial verringert. Zudem kann zumindest ein Teil der Materialschwächungen im zweiten Verfahrensprozess von den im ersten Verfahrensprozess bereits eingearbeiteten Materialschwächungen ausgehend eingearbeitet und die auf das Basismaterial wirkende Belastung weiter verringert werden.

Das Basismaterial kann bei dem Einarbeiten der Materialschwächungen in einem Batchbetrieb in Form von Platinenmaterial vorliegen, das insbesondere plattenartig oder in flexibleren Platinen auch mattenartig sein kann. Flexibles Basismaterial kann auch als Bahnware in einem kontinuierlichen Verfahren mit den Materialschwächungen versehen werden. Das Basismaterial kann eine Dicke von wenigen Millimetern, beispielsweise wenigstens 4 mm und eine Dicke bis zu einigen Zentimetern, vorzugsweise höchstens 20 mm, aufweisen. Das zelluläre Material kann von überwiegend offener Porosität oder bevorzugter von geschlossener Porosität sein, um Wasser- oder überhaupt Feuchteeintritt zu verhindern.

Bevorzugte Basismaterialien sind geschäumte Kunststoffmaterialien, wobei insbesondere geschäumte Thermoplaste, aber auch geschäumte Duroplaste (Thermosets) eingesetzt werden können. So sind beispielsweise Polyethylenterephtalat PET- oder Polystyrol PS- sowie flexiblere Polyethylen PE- oder Polypropylen PP-Schäume oder als Beispiel für ein duroplastisches Material auch Polyurethan PUR-Schäume vorteilhafte Kunststoffschaummaterialien. Das Kunststoffschaummaterial kann verstärkt sein, also im Schaummaterial eingebettete Verstärkungsstrukturen aufweisen, oder unverstärkt verwendet werden. Das Basismaterial wird bevorzugt extrudiert und dabei geschäumt.

Die erfindungsgemäße Strukturierung eignet sich in besonderem Maße auch für Verstärkungsstrukturen aus Brandschutzschäumen und vergleichbar sprödem Basismaterial. Die Sprödigkeit kann unterschiedliche Ursachen haben. So führt in vielen Fällen das Schäumen von preiswertem Polymermaterial zu sprödem Kunststoffschaum bzw. Basismaterial. In anderen Fällen ist die Sprödigkeit der Anpassung an eine bestimmte Verwendung geschuldet, wie beispielsweise im Falle von Brandschutzschäumen. Die erfindungsgemäße Strukturierung macht auch sprödes Basismaterial für Verwendungen zugänglich, in denen die Verstärkungsstruktur als Bestandteil eines mehrschichtigen Verbundwerkstoffs beim Formen eines Bauteils mehrdimensional verformt werden muss und/oder erhöhte mechanische Isotropie gefordert wird.

Die Materialschwächungen können im jeweiligen Trennprozess mittels Schneiden und/oder Sägen und/oder Punktieren in das Basismaterial eingearbeitet werden. Die Materialschwächungen können dementsprechend allein durch Schneiden oder allein durch Sägen oder allein durch Punktieren oder, und dies entspricht bevorzugten Verfahrensführungen, durch einen mehrstufigen Prozess eingearbeitet werden, der beispielsweise ein Schneiden und ein Sägen umfasst, vorzugsweise aus Schneiden und Sägen besteht.

In einem bevorzugten mehrstufigen Prozess der Einarbeitung wird in einem ersten Schritt der Form der Materialschwächungen entsprechend geschnitten und nach dem Schneidprozess, der selbst ein- oder mehrstufig sein kann, der Form der Materialschwächungen entsprechend gesägt. Die Materialschwächungen werden ausgesägt.

Das zum Schneiden und/oder Sägen und/oder Punktieren Gesagte gilt beim erfindungsgemäßen Verfahren für die Einarbeitung der ersten Gruppe der Materialschwächungen und/oder für die Einarbeitung der zweiten Gruppe der Materialschwächungen und/oder einer optionalen Einarbeitung einer dritten Gruppe der Materialschwächungen. Die sequentiell auszuführenden Verfahrensprozesse können somit jeweils einstufig oder im Rahmen des jeweiligen Verfahrensprozesses sequentiell auszuführende Verfahrensschritte unterteilt sein. So kann der erste Verfahrensprozess und/oder der zweite Verfahrensprozess und/oder ein optionaler dritter Verfahrensprozess beispielsweise jeweils einen Schneidprozess und einen Sägeprozess, die sequentiell ausgeführt werden, beinhalten.

Obgleich die Materialschwächungen in Form von Aussparungen eingearbeitet werden können, werden als Durchgänge geformte Materialschwächungen bevorzugt, da durchgehende Materialschwächungen vorteilhaft im Hinblick auf die dreidimensionale Verformbarkeit sind. Bei der Herstellung eines Composites kann die Verstärkungsstruktur im Bereich der Durchgänge von einer fließfähigen Verbindungsmasse durchdrungen werden, um die Deckschichten des Composites stoffschlüssig durch die Verstärkungsstruktur hindurch miteinander zu verbinden. Die Durchgänge können insbesondere als Schlitze und/oder Lochreihen gebildet sein.

Nach dem Einarbeiten der Materialschwächungen verbleiben Stege oder Brücken, die die Materialinseln miteinander verbinden. Diese Verbindungsstege können nach dem Einarbeiten der Materialschwächungen vorzugsweise nach dem letzten Einarbeitungsschritt, komprimiert und auf diese Weise im Querschnitt dauerhaft bleibend verringert werden. Das zelluläre Basismaterial wird in derartigen Ausführungen im Bereich der Stege verdichtet. Die Stege stehen hinter einer Oberseite und hinter einer Unterseite der Verstärkungsstruktur vorteilhafterweise zurück, so dass sie bei Einbettung der Verstärkungsstruktur zwischen zwei Deckschichten, beispielsweise zwei metallischen Deckschichten oder Kunststoffschichten, diese Deckschichten nicht berühren. Die Verdichtung der Stege durch Kompression ist eine preiswerte Möglichkeit, die Stege hinter der Ober- und der Unterseite der Verstärkungsstruktur zurückstehen zu lassen.

Eine Verdichtung des zellulären Basismaterials im Bereich der Verbindungsstege kann alternativ zu einer nachgelagerten Kompression auch durch eine dem Einarbeiten der Materialschwächungen vorangehende lokale Kompression erzielt werden. So können vor dem Einarbeiten der Materialschwächungen oder wenigstens einer Untermenge der Materialschwächungen durch Prägen an wenigstens einer der zwei einander gegenüberliegenden äußeren Oberflächen des Basismaterials rillenförmige Verdichtungsstreifen erzeugt werden. Die Materialschwächungen oder wenigstens eine Untermenge der Materialschwächungen kann vorteilhafterweise längs diesen Verdichtungsstreifen eingearbeitet werden. Ein vorangehendes Verdichten erleichtert die Einarbeitung der Materialschwächungen insbesondere bei sprödem Basismaterial.

Die Verdichtungsstreifen oder wenigstens eine Untermenge der Verdichtungsstreifen kann oder können sich vorteilhafterweise bis jeweils in wenigstens eine nächste Materialschwächung erstrecken. Dies hat den Effekt, dass sich in die betreffende Materialschwächung eindringende Verdichtungsmasse im Verdichtungsstreifen ausbreiten und die Verdichtungsmasse auf diese Weise über die Oberfläche der Verstärkungsstruktur gleichmäßiger verteilen kann. Vorteilhaft ist es in diesem Sinne auch, wenn die Verstärkungsstruktur an wenigstens einer ihrer beiden Oberflächen rillenförmige Verdichtungsstreifen zusätzlich zu Materialschwächungen, die als Durchgänge gebildet sind, aufweist. Werden Materialschwächungen im Bereich der Verdichtungsstreifen eingearbeitet, sind die nach dem Einarbeiten erhaltenen Verbindungsstege bereits komprimiert. Die Komprimierung vor dem Einarbeiten der Materialschwächungen kann auch in Kombination mit einer nach dem Einarbeiten der Materialschwächungen vorgenommenen Verdichtung kombiniert werden.

Wenn die Verstärkungsstruktur zwischen Deckschichten eines herzustellenden Composites eingelegt ist und die Materialschwächungen wie bevorzugt als Durchgänge in der Verstärkungsstruktur geformt sind, bilden die Materialschwächungen zwischen den Deckschichten ein Kanalsystem, das sich über die gesamte Fläche der Verstärkungsstruktur kontinuierlich durchgehend erstreckt und dementsprechend von der Verbindungsmasse parallel zur flächenhaften Verstärkungsstruktur durchdrungen werden kann, so dass die Verstärkungsstruktur sich insbesondere für eine Befüllung mit Verbindungsmasse im Wege einer Vakuuminjektion eignet, wobei die Verbindungsmasse von der Seite her eingespritzt werden kann. Andererseits kann das Composite aber auch durch Auflegen der Verstärkungsstruktur auf eine der Deckschichten, Befüllen der Materialschwächungen mit der Verbindungsmasse und Auflegen der anderen der Deckschichten auf die Verstärkungsstruktur hergestellt werden.

In bevorzugten Ausführungen werden die Materialinseln an einer Oberseite oder einer Unterseite längs zumindest eines Teil ihrer durch die Einarbeitung der Materialschwächungen gebildeten Ränder oberflächennah verdichtet und dadurch gerundet. Durch die Verrundung wird zum einen einer von scharfen Kanten ausgehenden Kerbwirkung entgegengewirkt, zum anderen wird die Fläche der Materialschwächungen an der Oberseite oder Unterseite der Verstärkungsstruktur vergrößert, wodurch vorteilhafterweise für die Verbindungsmasse die für den Stoffschluss mit den Deckschichten oder wenigstens einer der Deckschichten zur Verfügung stehende Fläche und somit die Festigkeit des Composites vergrößert wird.

Die Verdichtung des zellulären Materials im Bereich der Stege und/oder der Verdichtungsstreifen und/oder die oberfächennahe Verdichtung der Materialinseln kann oder können an dem zellulären Material bei Umgebungstemperatur, beispielsweise Raumtemperatur, oder in einem erwärmten Zustand des zellulären Materials ausgeführt werden. Es kann ein beheizbarer oder nicht beheizbarer Stegpräger zum Verdichten der Stege und/oder der Verbindungsstreifen und/oder ein beheizbarer oder nicht beheizbarer Kopfpräger zum oberflächennahen Verdichten, gegebenenfalls auch nur randnahen Verdichten der Materialinseln verwendet werden. Falls das zelluläre Material im warmen Zustand verdichtet wird, wird es vorzugsweise auf eine Temperatur knapp unterhalb seiner Schmelztemperatur erwärmt und bei dieser Temperatur verdichtet.

Ein bevorzugtes Herstellverfahren umfasst pro Gruppe der Materialschwächungen wenigstens einen Trennprozess, beispielsweise Schneiden und/oder Sägen und/oder Punktieren, und vor und/oder nach diesem Strukturieren wenigstens einen Verdichtungsprozess, nämlich das Verdichten des zellulären Materials vor dem Einarbeiten der Materialschwächungen lokal in Verdichtungsstreifen und/oder nachträglich im Bereich der Stege und/oder längs der Ränder der Materialinseln.

Zum Einarbeiten der Materialschwächungen sind an einem Trennwerkzeug mehrere Trennelemente, beispielsweise Schneidmesser oder mehrere Sägeblätter oder Punktiernadeln, einer Oberseite des Basismaterials zugewandt angeordnet und werden durch eine Bewegung des Werkzeugs in Richtung auf eine Unterseite des Basismaterials in oder vorzugsweise durch das Basismaterial bewegt, beispielsweise gestoßen. Der Begriff der Oberseite des Basismaterials soll hier nur die den Trennelementen zugewandte Seite des Basismaterials bezeichnen, nicht jedoch eine Aussage darüber treffen, ob das Trennwerkzeug vertikal über oder unter dem Basismaterial angeordnet ist. Das Basismaterial kann auch in vertikaler Ausrichtung mit dem bei derartiger Ausrichtung daneben angeordneten Trennwerkzeug bearbeitet werden. Zweckmäßigerweise liegt das Basismaterial, falls es sich um Platinen handelt, auf einer Unterlage auf, und die Trennelemente werden von oben nach unten in oder vorzugsweise durch das Basismaterial gestoßen.

Das jeweilige Trennwerkzeug kann der zu schaffenden Strukturierung der Verstärkungsstruktur entsprechend über die gesamte Fläche einer Ausgangsplatine des Basismaterials mit Trennelementen bestückt sein, so dass der Trennprozess mit einem einzigen Hub pro Ausgangsplatine bewerkstelligt werden kann. In alternativen Ausführungen weist das Werkzeug nur einen Balken oder anderen Träger auf, von dem nebeneinander in einem Streifen aufgereiht die Trennelemente abragen. Bei einer Hubbewegung werden somit nur in einem Streifen nebeneinander liegend Materialschwächungen erzeugt, so dass das Trennwerkzeug relativ zu der Ausgangsplatine quer zu dem Träger weiterbewegt werden muss und sukzessive einen Streifen von Materialschwächungen nach der anderen einarbeitet. Anstatt des Werkzeugs oder gegebenenfalls zusätzlich wird bevorzugt die Ausgangsplatine im Raum bewegt, um eine Linie einen Streifen von Materialschwächungen nach der anderen einzuarbeiten.

Falls das Basismaterial so flexibel ist, dass es bereits ohne die Materialschwächungen auf eine Rolle gewickelt werden kann, ist die Einarbeitung der Materialschwächungen in einem kontinuierlichen Verfahren möglich. Derartige Materialien, beispielsweise PE- oder PP-Schäume können bei kontinuierlicher Verfahrensführung von einer Rolle abgewickelt und durch einen Walzenspalt geführt werden, den zwei gegenläufig zueinander rotierende Walzen oder zumindest eine Walze und eine gegebenenfalls festen Gegendruckeinrichtung bilden. Im Spalt werden die Materialschwächungen eingearbeitet.

Falls der jeweilige Trennprozess wie bevorzugt einen Schneidprozess und nachfolgend einen Sägeprozess beinhaltet, wird das Basismaterial vorzugsweise automatisch dem Schneidwerkzeug und anschließend dem Sägewerkzeug zugeführt, im Batchbetrieb beispielsweise mittels eines Förderbands oder anders gebildeten Endlosfördermittels und im kontinuierlichen Prozess als Bahnware, die durch in Förderrichtung hintereinander angeordnete Walzenspalte gefördert wird. Beinhaltet der erste Trennprozess und/oder der zweite Trennprozess und/oder der optionale dritte Trennprozess mehrere Unterschritte, beispielsweise einen Schneidprozess und einen Sägeprozess, so umfasst eine Vorrichtung zur Durchführung des jeweiligen Trennprozesses ein Trennwerkzeug für den einen und ein weiteres Trennwerkzeug für den anderen Schritt, beispielsweise ein Schneidwerkzeug mit die Trennelemente bildenden Schneidelementen und ein Sägewerkzeug mit die Trennelemente bildenden Sägeelementen.

Vorteilhafte Details zum Einarbeiten von Materialschwächungen mittels Trennelementen, die als Schneidmesser ausgeführt sind, und/oder mittels Trennelementen, die als Sägeblätter ausgeführt sind, werden in der EP 2 217 436 B1 beschrieben, die für das Einarbeiten von Materialschwächungen im Rahmen der erfindungsgemäßen Strukturierung in Bezug genommen wird.

Die Erfindung hat auch ein Composite zum Gegenstand, das wenigstens eine Deckschicht und eine mit der Deckschicht gefügte Verstärkungsstruktur umfasst. Insbesondere betrifft die Erfindung ein Composite in Sandwichbauweise, das wenigstens zwei Deckschichten und zwischen den Deckschichten eine eingelegte Verstärkungsstruktur der erfindungsgemäßen Art sowie eine die Verstärkungsstruktur durchsetzende, stoffschlüssig mit beiden Deckschichten verbundene Verbindungsmasse aufweist, die bevorzugt von einem Kunstharz oder einem Klebstoff gebildet wird. Die Deckschichten können insbesondere Kunststoffschichten oder auch Metallschichten, beispielsweise Leichtmetallschichten sein. Das Composite kann auch weitere Deckschichten sowie weitere Verstärkungsstrukturen aufweisen, insbesondere in Mehrfachsandwichbauweise hergestellt sein. Als Beispiel mag ein Doppelsandwich mit drei Deckschichten dienen, nämlich einer äußeren, einer mittleren und einer weiteren äußeren Deckschicht und zwei zwischen den äußeren Deckschichten und jeweils der mittleren Deckschicht angeordneten Verstärkungsstrukturen.

Bevorzugte Merkmale werden auch in den Unteransprüchen und den Kombinationen der Unteransprüche offenbart.

Nachfolgend werden Ausführungsbeispiele der Erfindung anhand von Figuren erläutert. An den Ausführungsbeispielen offenbar werdende Merkmale bilden je einzeln und in jeder Merkmalskombination die Gegenstände der Ansprüche und auch die vorstehend beschriebenen Ausgestaltungen vorteilhaft weiter. Es zeigen:
- Figur 1: eine Verstärkungsstruktur eines ersten Ausführungsbeispiels in einer Draufsicht,
- Figur 2: eine Vorläuferstruktur der Verstärkungsstruktur des ersten Ausführungsbeispiels,
- Figur 3: Trennwerkzeuge zur Herstellung von Verstärkungsstrukturen in sequentiell durchzuführenden Trennprozessen,
- Figur 4: die Verstärkungsstruktur des ersten Ausführungsbeispiels mit relativ zur Verstärkungsstruktur positionierten Trennelementen zweier Trennwerkzeuge,
- Figur 5: zwei Trennwerkzeuge zum Herstellen der Verstärkungsstruktur des ersten Ausführungsbeispiels,
- Figur 6: eine Verstärkungsstruktur eines zweiten Ausführungsbeispiels in einer schematisierten Draufsicht,
- Figur 7: eine der Verstärkungsstrukturen in einem Querschnitt,
- Figur 8: ein verformtes Composite, das eine der Verstärkungsstrukturen umfasst,
- Figur 9: ein Schneidmesser,
- Figur 10: ein Sägeblatt,
- Figur 11: einen Stegpräger,
- Figur 12: ein als sternförmiges Schneidelement gebildetes Trennelement,
- Figur 13: ein als sternförmiges Sägeelement gebildetes Trennelement,
- Figur 14: einen Kopfpräger.

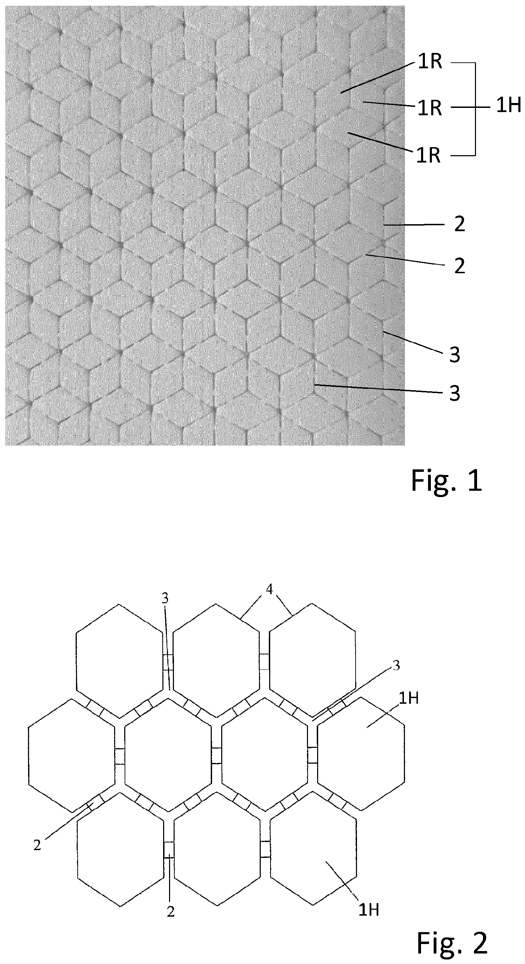

Figur 1 zeigt eine Verstärkungsstruktur aus einem zellulären Material, vorzugsweise ein Kunststoffschaummaterial. In dem zellulären Material können verstärkende Strukturen, beispielsweise Filamente eingebettet sein, bevorzugter handelt es sich jedoch um ein nicht verstärktes zelluläres Material. Die Verstärkungsstruktur des ersten Ausführungsbeispiels besteht aus polygonalen Materialinseln 1R und demgegenüber dünnen Verbindungsstegen 2. Die Materialinseln 1R sind an ihren Seiten über jeweils einen mittigen Verbindungssteg 2 mit der nächstbenachbarten Materialinsel 1R verbunden. Die Materialinseln 1R weisen in der Draufsicht jeweils die Form eines Rhombus auf. Aufgrund der Rhombusform ist jede der Materialinseln 1R über vier Verbindungsstege 2 mit ihren nächstbenachbarten Materialinseln IR verbunden. Länge und Breite der Materialinseln 1R sind jeweils deutlich größer als die Länge und die Dicke der Verbindungsstege 2. Der Raum zwischen den jeweils nächstbenachbarten Materialinseln 1R ist abgesehen von den Verbindungsstegen 2 frei. Die zwischen den Materialinseln 1R auf diese Weise frei bleibenden Kavitäten bilden im Vergleich zu einem nichtstrukturierten platten- oder mattenartigen zellulären Basismaterial Materialschwächungen 3. In Abhängigkeit von der Biegesteifigkeit des platten- oder mattenartigen Basismaterials erleichtern diese Kavitäten bzw. Materialschwächungen 3 die dreidimensionale Verformbarkeit oder ermöglichen diese überhaupt erst in einem nennenswerten Ausmaß.

Die Verstärkungsstruktur ist in erster Linie durch Verlagerung der Materialinseln 1R relativ zueinander, nämlich durch Verformung der Verbindungsstege 2, dreidimensional verformbar, d. h. um mehrere nicht parallel zueinander weisende Achsen biegbar. Die Verstärkungsstruktur eignet sich daher als Kernwerkstoff für dreidimensional gewölbte Leichtbau-Composite in Sandwichbauweise. Axial fluchtende Materialschwächungen 3 bilden jeweils eine bevorzugte Biegeachse der Verstärkungsstruktur.

Die Materialschwächungen 3 ermöglichen auch das Eindringen einer Verbindungsmasse, beispielsweise einer Kunstharz- oder Klebstoffmasse, mit der zwei Deckschichten über die Verstärkungsstruktur 1, 2 hinweg stoffschlüssig fest miteinander verbunden werden können. Die Verbindungsmasse füllt die zwischen den Materialinseln 1R im Bereich der Materialschwächungen 3 freibleibenden Räume vorzugsweise vollständig aus und bildet im Composite im ausgehärteten Zustand dementsprechend eine rautenförmig strukturierte Verstärkungsstruktur für die Deckschichten. Verwendungen für Composite in Sandwichbauweise werden zwar bevorzugt, grundsätzlich kann die Verstärkungsstruktur aber auch mit nur einer Deckschicht mittels Verbindungsmasse in der für die Sandwichbauweise geschilderten Weise gefügt sein, das Composite eine Deckschicht also nur an einer Flachseite der Verstärkungsstruktur aufweisen.

Die Verstärkungsstruktur wird batchweise aus einem platten- oder mattenartigen, zellulären Basismaterial, einer Ausgangsplatine, oder kontinuierlich aus einem Bahnmaterial in mehreren Verfahrensschritten erzeugt. Die Ausgangsplatine oder Bahnware weist überall eine zumindest im Wesentlichen den Materialinseln 1R entsprechende Materialdicke auf. Es handelt sich um ein homogenes, nicht strukturiertes Platinen- oder Bahnmaterial, das allerdings mikroskopisch und gegebenenfalls auch makroskopisch eine zelluläre Struktur mit einer entsprechend geringen Dichte aufweist. Für das Ausführungsbeispiel sei angenommen, dass es sich um ein Kunststoffschaummaterial handelt. Derartige Schaummaterialien können insbesondere durch Extrusion hergestellt und zu den zu bearbeitenden Ausgangsplatinen zertrennt oder bei entsprechender Flexibilität des Basismaterials als Bahnware auf Rolle gewickelt werden.

In solch ein zelluläres Basismaterial werden in einem mehrstufigen Verfahren die Materialschwächungen 3 eingearbeitet. In einem ersten Verfahrensprozess wird eine erste Gruppe der Materialschwächungen 3 eingearbeitet. Eine zweite Gruppe von Materialschwächungen 3 wird in einem nachfolgenden Verfahrensprozess eingearbeitet. Die Einarbeitung der ersten Gruppe der Materialschwächungen 3 und/oder die Einarbeitung der zweiten Gruppe der Materialschwächungen 3 kann oder können jeweils in sequentiell auszuführende Unterschritte unterteilt sein. Im ersten Prozess wird eine Überstruktur aus konvexen Polygonen 1H erzeugt. Im zweiten Prozess wird die Feinstruktur aus den rautenförmigen Polygonen 1R erzeugt. In der fertigen Verstärkungsstruktur des ersten Ausführungsbeispiels setzen sich die Polygone 1H jeweils aus mehreren nebeneinander angeordneten Materialinseln 1R zusammen und werden im Folgenden daher auch als zusammengesetzte Polygone 1H oder Polygone 1H der Überstruktur bezeichnet. Die Materialinseln 1R werden zur Unterscheidung im Folgenden auch als Polygone 1R oder Basispolygone 1R der Feinstruktur bezeichnet.

Figur 2 zeigt eine im ersten Prozess erzeugte Vorläuferstruktur, aus der im nachfolgenden zweiten Prozess die Verstärkungsstruktur erzeugt wird. Die Vorläuferstruktur weist durch Verbindungsstege 2 verbundene Materialinseln mit den Umrissen der zusammengesetzten Polygone 1H der späteren Überstruktur der Verstärkungsstruktur auf. Die Polygone 1H sind regelmäßige Hexagone. Sie sind jeweils an ihren Seiten, d. h. zwischen den Ecken, über Verbindungsstege 2 mit ihren nächstbenachbarten Polygonen 1H verbunden und werden im Übrigen durch die Materialschwächungen 3 voneinander getrennt. Im weiteren Verfahren zur Herstellung der Verstärkungsstruktur bleiben die Verbindungsstege 2 und Materialschwächungen 3 der Vorläuferstruktur erhalten. Es werden allerdings zusätzliche Materialschwächungen 3 eingearbeitet und dadurch weitere Verbindungsstege 2 geschaffen, wenn die Polygone 1H im nachgelagerten zweiten Prozess durch das Einarbeiten der weiteren Materialschwächungen 3 in die Basispolygone 1R unterteilt werden.

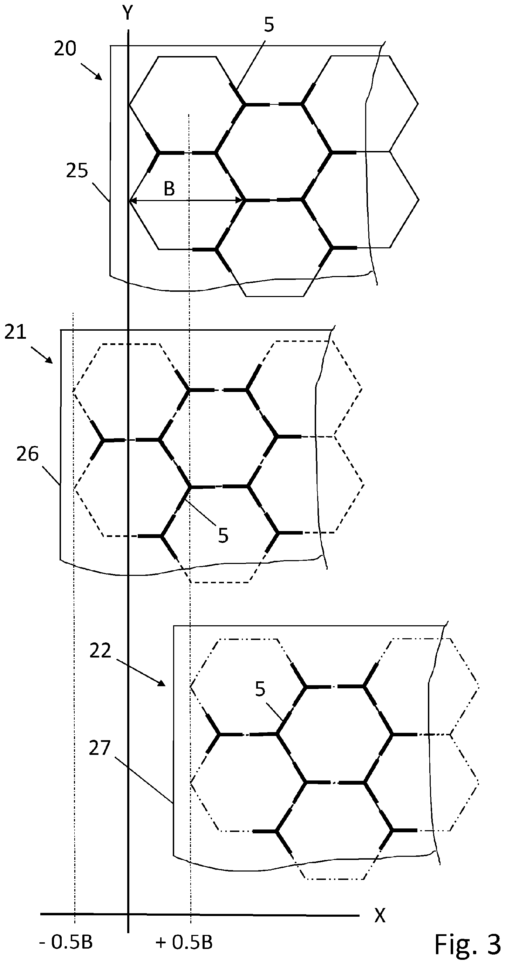

Figur 3 zeigt mehrere Trennwerkzeuge, die jeweils mit Trennelementen 5 bestückt sind. Dabei handelt es sich um ein erstes Trennwerkzeug 20, ein zweites Trennwerkzeug 21 und ein drittes Trennwerkzeug 22. Das erste Trennwerkzeug 20 umfasst einen Träger 25, der insbesondere als Trägerplatte oder Trägergitter gebildet sein kann, und eine Mehrzahl von am Träger 25 angeordneten und vom Träger 25 vorragenden Trennelementen 5. Das Trennwerkzeug 20 dient der Einarbeitung der ersten Gruppe von Materialschwächungen 3 im ersten Trennprozess. Hierzu werden eine Ausgangsplatine des Basismaterials und der Träger 25 einander gegenüberliegend positioniert und durch eine relative Hubbewegung aufeinander zu bewegt, so dass die vom Träger 25 in Richtung auf die Ausgangsplatine vorragenden Trennelemente 5 das Basismaterial der Ausgangsplatine durchstoßen und die erste Gruppe der Materialschwächungen 3 in Form von Durchgängen erzeugen.

Das zweite Trennwerkzeug 21 umfasst einen Träger 26, von dem Trennelemente 5 des zweiten Trennwerkzeugs 21 vorragen. Ebenso umfasst das dritte Trennwerkzeug 22 einen Träger 27, von dem Trennelemente 5 des dritten Trennwerkzeugs 22 vorragen. Die Trennelemente 5 der Trennwerkzeuge 21 und 22 sind am jeweiligen Träger 26 und 27 wie die Trennelemente 5 des ersten Trennwerkzeugs 20 angeordnet.

Die Trennelemente 5 der Trennwerkzeuge sind in der Draufsicht, die auch in Figur 3 dargestellt ist, jeweils sternförmig. Sie weisen jeweils mehrere, im Ausführungsbeispiel drei von einem Zentrum radial abragende Trennarme auf. Die Trennarme können insbesondere als Schneidmesser oder Sägeblätter gebildet sein, wie später noch erläutert wird. Die Anordnung der Trennelemente 5 am jeweiligen Träger 25, 26 und 27 ist zumindest soweit gleich, dass die mit den Trennelementen 5 bestückten Träger 25, 26 und 27 übereinander so positioniert werden können, dass die Zentren der Trennelemente 5 des jeweiligen Trägers in einer Flucht mit den Zentren der Trennelemente 5 der jeweiligen anderen Träger liegt. Im Ausführungsbeispiel entsprechen die Trennwerkzeuge 20, 21 und 22 einander so weit, dass die Träger 25, 26 und 27 übereinanderliegend so positioniert werden können, dass die Trennelemente 5 des jeweiligen Trennwerkzeugs mit den Trennelementen 5 der jeweils anderen Trennwerkzeuge in einer Flucht liegen. Die Bearbeitungswerkzeuge 20, 21 und 22 weisen dementsprechend gleiche Trennelemente 5 in jeweils gleicher geometrischer Anordnung an den Trägern 25, 26 und 27 auf.

Für die Strukturierung der Verstärkungsstruktur des ersten Ausführungsbeispiels werden nur zwei der Trennwerkzeuge 20, 21 und 22 benötigt, beispielsweise die Trennwerkzeuge 20 und 21.

So kann im ersten Trennprozess mit dem ersten Trennwerkzeug 20 die erste Gruppe der Materialschwächungen 3 in die Ausgangsplatine eingearbeitet und dadurch die Vorläuferstruktur der Figur 2 erzeugt werden. Im nachfolgenden, zweiten Trennprozess kann die zweite Gruppe der Materialschwächungen 3 mit dem zweiten Trennwerkzeug 21 eingearbeitet werden. Die Materialschwächungen 3 der zweiten Gruppe werden in der Draufsicht gesehen in eine Richtung X, die sich parallel zu Außenseiten der im ersten Trennprozess erhaltenen Polygone 1H erstreckt, versetzt zu den Materialschwächungen 3 der ersten Gruppe eingearbeitet. Die Zentren einer Untermenge der Trennelemente 5 des zweiten Trennwerkzeugs 21 werden hierfür in eine Flucht mit den Zentren einer Untermenge der zuvor im ersten Trennprozess geschaffenen Materialschwächungen 3 positioniert. Sind die Trennelemente 5, wie im Ausführungsbeispiel, so angeordnet, dass sie miteinander regelmäßige Hexagone entsprechend den hexagonalen Polygonen H1 (Figur 2) bilden, liegt pro Hexagon bzw. Polygon H1 am Umfang umlaufend jedes zweite Trennelement 5 des zweiten Trennwerkzeugs 1 beim Einarbeiten in Hubrichtung des Werkzeugs in der Flucht zu einer der Materialschwächungen 3 der ersten Gruppe. Dies erleichtert das Einarbeiten der betreffenden Materialschwächungen 3 der zweiten Gruppe.

Der Versatz, den die Bearbeitungswerkzeuge 20 und 21 bei dem Einarbeiten der Materialschwächungen 3 in Bezug auf die Platine des Basismaterials relativ zueinander aufweisen, entspricht der halben Breite B der Hexagone bzw. Polygone H1 der Überstruktur. Die Breite B wird zwischen den beiden Ecken des Polygons 1H gemessen, die am Außenumfang des jeweiligen Polygons 1H um 180° zueinander versetzt sind. In der Darstellung der Figur 3 ist das zweite Bearbeitungswerkzeug 21 in X-Richtung zur Veranschaulichung deshalb relativ zum ersten Bearbeitungswerkzeug 20 um -0.5B versetzt dargestellt.

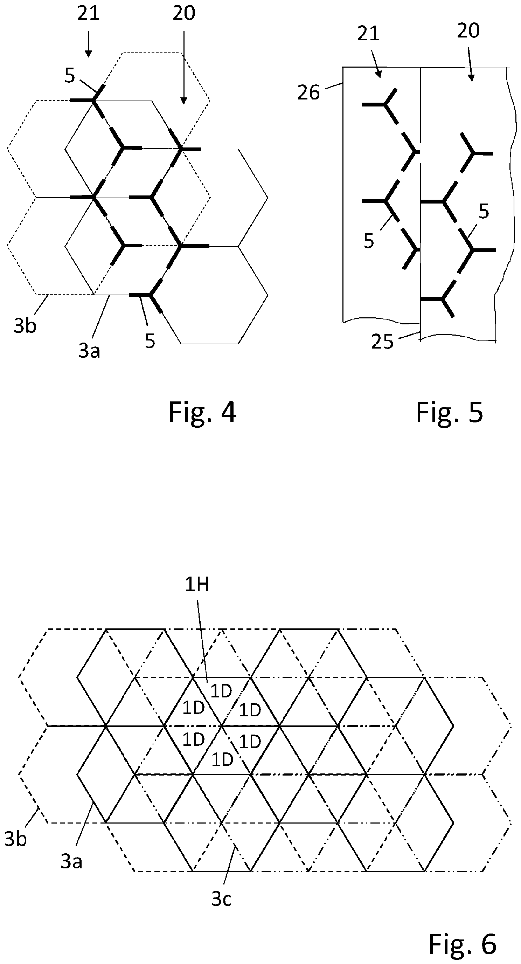

In Figur 4 ist die Relativposition, welche die Trennwerkzeuge 20 und 21 bei den nacheinander durchzuführenden Trennungsprozessen einnehmen, erkennbar. Wie in Figur 3 sind die von den Trennelementen 5 des Trennwerkzeugs 20 gebildeten Hexagone in durchgezogenen Linien und die von den Trennelementen 5 des Trennwerkzeugs 21 gebildeten Hexagone in Strichlinien dargestellt. Die im ersten Trennprozess eingearbeiteten Materialschwächungen, d. h. die erste Gruppe der Materialschwächungen, ist mit 3a und die im zweiten Trennprozess eingearbeiteten Materialschwächungen, d. h. die zweite Gruppe der Materialschwächungen, ist mit 3b bezeichnet. Die beiden Gruppen von Materialschwächungen 3a und 3b sind gleich und werden nur zur Unterscheidung hinsichtlich der Reihenfolge des Einarbeitens mit 3a und 3b bezeichnet.

In Figur 5 sind die Trennelemente 5 und Träger 25 und 26 der Trennwerkzeuge 20 und 21 ihrem Versatz relativ zueinander entsprechend ohne die Hexagone dargestellt, wobei der Versatz auf das zu bearbeitende Basismaterial bezogen ist.

Figur 6 zeigt eine Verstärkungsstruktur eines zweiten Ausführungsbeispiels, die durch das Einbringen weiterer Materialschwächungen 3c nochmals feiner als die Verstärkungsstruktur des zweiten Ausführungsbeispiels strukturiert ist. Die Verstärkungsstruktur des zweiten Ausführungsbeispiels wird aus der Verstärkungsstruktur des ersten Ausführungsbeispiels erhalten, indem eine dritte Gruppe 3c der Materialschwächungen in die Verstärkungsstruktur des ersten Ausführungsbeispiels eingearbeitet wird.

Die Materialschwächungen 3a der ersten Gruppe sind in Figur 6 in durchgezogenen Linien angedeutet. In Strichlinien sind die Materialschwächungen 3b der zweiten Gruppe angedeutet. Die zusätzlich eingebrachten Materialschwächungen 3c der dritten Gruppe sind in Strichpunktlinien dargestellt. Die Materialschwächungen der drei Gruppen sind wie zum zweiten Ausführungsbeispiel lediglich der begrifflichen Unterscheidbarkeit wegen mit 3a, 3b und 3c bezeichnet.

In Figur 3 ist das dritte Trennwerkzeug 22 relativ zum ersten Trennwerkzeug 20 und zum zweiten Trennwerkzeug 21 in X-Richtung versetzt positioniert, wobei der Versatz zum ersten Trennwerkzeug 20, genauer gesagt zu dessen Trennelementen 5, +0.5B beträgt. Der Versatz zum zweiten Trennwerkzeug 21 bzw. dessen Trennelementen 5 beträgt dementsprechend +B in X-Richtung. Mit jedem der Trennwerkzeuge 20, 21 und 22 werden im Ergebnis Materialschwächungen 3 bzw. 3a, 3b, 3c in die gleiche Platine des Basismaterials entsprechend der in Figur 2 dargestellten Überstruktur eingearbeitet, wobei die zweite Überstruktur gegen die X-Richtung und die dritte Überstruktur in die X-Richtung um den halben Betrag der Breite B gegenüber der ersten Überstruktur versetzt sind. Die mit dem zweiten Trennwerkzeug 21 und dem dritten Trennwerkzeug 22 gebildeten hexagonalen Polygone stoßen in der Verstärkungsstruktur des zweiten Ausführungsbeispiels (Figur 6) mit ihren Ecken im Zentrum jeweils eines der mit dem ersten Trennwerkzeug 20 erzeugten Polygone 1H aneinander.

Die längs der Seitenränder der Dreiecke 1D verlaufenden Materialschwächungen 3a, 3b und 3c bilden jeweils eine bevorzugte Biegeachse der Verstärkungsstruktur des zweiten Ausführungsbeispiels. Im zweiten Ausführungsbeispiel verlaufen die miteinander fluchtenden Materialschwächungen längs der jeweiligen Biegeachse kontinuierlich, während sie im ersten Ausführungsbeispiel regelmäßig durch dazwischenliegende Rhomben 1R (Figur 1) unterbrochen werden.

Aufgrund der Überlagerung der Trennwerkzeuge 20, 21 und 22 beim sequentiellen Einarbeiten der drei Gruppen von Materialschwächungen 3a, 3b und 3c setzt sich die Verstärkungsstruktur des zweiten Ausführungsbeispiels aus gleichseitigen Dreiecken 1D zusammen. Die Dreiecke 1D sind an ihren drei Seiten jeweils über einen Verbindungssteg entsprechend den Verbindungsstegen 2 der Figuren 1 und 2 miteinander verbunden und ansonsten durch die Materialschwächungen 3a, 3b und 3c voneinander separiert. Jeweils sechs der Dreiecke 1D bilden gemeinsam ein zusammengesetztes hexagonales Polygon 1H.

Zum Einarbeiten der Materialschwächungen 3 bzw. 3a, 3b, 3c können eine Ausgangsplatine des Basismaterials auf einer Unterlage aufliegend positioniert und zum Herstellen der Verstärkungsstruktur des ersten Ausführungsbeispiels nacheinander die Trennwerkzeuge 20 und 21 und zum Herstellen der Verstärkungsstruktur des zweiten Ausführungsbeispiels zusätzlich auch noch das Trennwerkzeug 22 mit dem in Figur 3 dargestellten axialen Versatz relativ zueinander zum Einsatz gebracht werden. Bevorzugter sind die Trennwerkzeuge, nämlich die Trennwerkzeuge 20 und 21 zum Herstellen der Verstärkungsstruktur des ersten Ausführungsbeispiels und die Trennwerkzeuge 20, 21 und 22 zum Herstellen der Verstärkungsstruktur des zweiten Ausführungsbeispiels, in einer Fertigungslinie hintereinander angeordnet, so dass eine Ausgangsplatine des Basismaterials in Förderrichtung X der Linie nacheinander zu den Trennwerkzeugen 20 und 21 bzw. 20, 21 und 22 gefördert und dem axialen Versatz von ±0.5B relativ zum Trennwerkzeug 21 bzw. relativ zu den Trennwerkzeugen 21 und 22 positioniert wird.

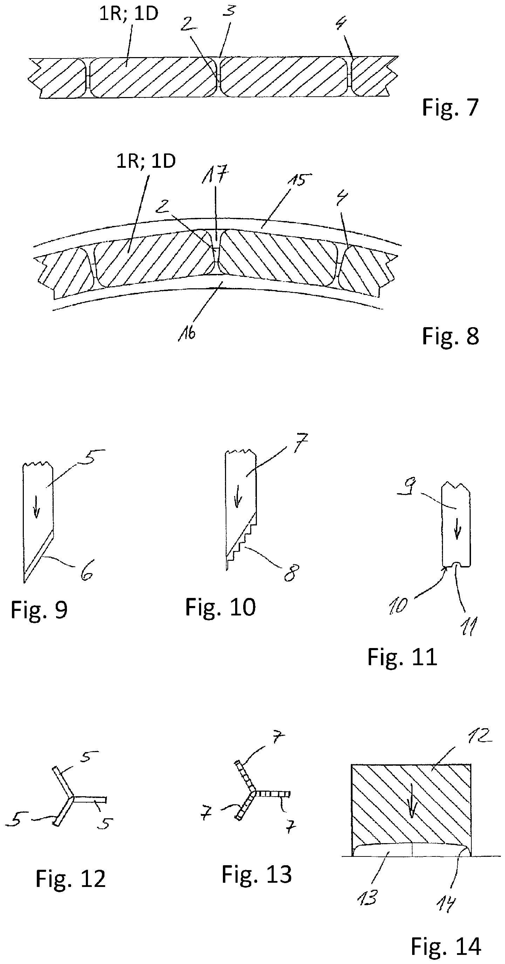

Figur 7 zeigt eine der Verstärkungsstrukturen in einem nicht verformten Ausgangszustand, in dem die Verstärkungsstruktur im Wesentlichen eine der Form der Materialinseln 1R oder 1D entsprechend strukturierte Platte oder plane Matte bildet.

Figur 8 zeigt die gleiche Verstärkungsstruktur in einem verformten Zustand, in dem nächstbenachbarte Materialinseln 1R oder 1D durch Biegung jeweils eines sie verbindenden Verbindungsstegs 2 unter einem Winkel geneigt zueinander weisen.

Nach Abschluss des mehrstufigen Trennprozesses können die zwischen den Materialinseln 1 und Materialschwächungen 3 verbliebenen Verbindungsstege 2 durch Kompression verdichtet und dadurch im Querschnitt verringert werden, so dass die verdichteten Stege 2 sowohl hinter der Oberseite als auch der Unterseite der Materialinseln 1 ein Stück weit zurückstehen, wie beispielsweise in den Figuren 7 und 8 erkennbar ist. Die Verdichtung kann mit oder ohne Erwärmung der Stege 2 vonstatten gehen. Die Querschnittsverringerung der Stege 2 durch Kompression stellt ein maschinell einfach und daher preiswert durchführbares Verfahren dar, mit dem im Bereich der Materialschwächungen 3 für die Verbindungsmasse Kontaktfläche zur jeweiligen Deckschicht des Composites geschaffen wird.

Vor dem Verdichten der Stege 2 oder bevorzugter nach dem Verdichten der Stege 2, gegebenenfalls auch gleichzeitig mit diesem Verdichten, können die Materialinseln 1R oder 1D an der Oberseite und der Unterseite jeweils in einem oberflächennahen Tiefenbereich mittels Kompression verdichtet werden, um die nach dem Trennprozess noch scharfkantigen Ränder der Materialinseln 1R oder 1D zu runden. Die bereits verrundeten Ränder sind in den Figuren 7 und 8 mit dem Bezugszeichen 4 versehen. Auch diese Materialverdichtung kann entweder durch ein Erwärmen der Materialinseln 1R oder 1D zumindest im oberflächennahen Tiefenbereich unterstützt oder auch bei Umgebungstemperatur nur mittels Druck durchgeführt werden. Die Verrundung der Ränder 4 verhindert zum einen Kerbwirkungen und vergrößert zum anderen vorteilhafterweise die für die Verbindungsmasse verfügbare Kontaktfläche mit der an der jeweiligen Ober- oder Unterseite der Verstärkungsstruktur befindlichen Deckschicht des Composites.

Der erste Trennprozess und/oder der zweite Trennprozess und/oder der dritte Trennprozess kann oder können in mehrere Trennschritte unterteilt sein. Auf eine Unterteilung in einen Schneideschritt und einen Sägeschritt oder beispielsweise in einen Punktierschritt und einen Sägeschritt wurde bereits hingewiesen. Ist ein Trennprozess in mehrere Trennschritte unterteilt, werden diese vorzugsweise sequentiell nacheinander ausgeführt. Es kommen somit im betreffenden Trennprozess zwei oder mehr Trennwerkzeuge nacheinander zum Einsatz, beispielsweise ein Schneidwerkzeug und ein Sägewerkzeug. Diese unterschiedlichen Trennwerkzeuge sind jeweils ein Trennwerkzeug im Sinne der Erfindung. Wird eine der Gruppen der Materialschwächungen in einem in Unterschritte unterteilten Trennprozess eingebracht, wird zweckmäßigerweise auch die andere oder werden zweckmäßigerweise auch die mehreren anderen Gruppen von Materialschwächungen jeweils in einem der gleichen Weise in Unterschritte unterteilten Trennprozess eingebracht. Die Unterteilung kann aber auch so sein, dass unmittelbar nacheinander als erster und zweiter und optional dritter Trennprozess jeweils ein Trennprozess der gleichen Art, beispielsweise ein Schneidprozess, und danach nochmals ein erster und zweiter und optional ein dritter Trennprozess einer jeweils gleichen, aber anderen Art, beispielsweise ein Sägeprozess, durchgeführt werden.

Die Figuren 9 und 10 zeigen jeweils ein Schneidmesser 5 und ein Sägeblatt 7 in einer Seitenansicht. Für die Einarbeitung der Materialschwächungen 3 bzw. 3a, 3b, 3c sind an einem Schneidwerkzeug eine Vielzahl der Schneidmesser 5 und an einem Sägewerkzeug eine ebensolche Vielzahl von Sägeblättern 7 angeordnet. Das Schneidwerkzeug kann beispielsweise von einem Schneidmesserträger gebildet werden, von dem die Schneidmesser 5 auf das zu bearbeitende Basismaterial zu ragend angeordnet sind. Das Sägewerkzeug kann in gleicher Weise solch einen Sägeblattträger für die daran auf das Basismaterial zu ragend angeordneten Sägeblätter 7 aufweisen. Die Schneidmesser 5 und die Sägeblätter 7 sind am jeweiligen Träger in Dreiergruppen aus jeweils drei Y-förmig zueinander weisenden Schneidmessern 5 bzw. Sägeblättern 7 angeordnet. Das jeweilige Werkzeug ist in eine Stoßrichtung, die am Schneidmesser 5 und am Sägeblatt 7 durch einen Richtungspfeil angedeutet ist, hin und her beweglich, so dass bei der jeweiligen Hubbewegung die Schneidmesser 5 des Schneidwerkzeugs oder Sägeblätter 7 des Sägewerkzeugs in Stoßrichtung auf das Basismaterial zu und durch dieses hindurch gestoßen werden. Die Schneidmesser 5 weisen je eine in Stoßrichtung vorragende Spitze und von dieser geneigt zur Stoßrichtung, im Ausführungsbeispiel mit konstantem Neigungswinkel geneigt, eine Schneidkante 6 vergleichbar einer Guillotine auf, so dass die Schneidmesser 5 zunächst mit ihrer Spitze in das Basismaterial einstechen und sich dann längs der jeweiligen Schneidkante 6 fortschreitend durchschneiden, um einen ebenen Schnitt zu erhalten.

Der Sägeprozess wird vorzugsweise nach dem Schneiden durchgeführt, wobei die Sägeblätter 7 den eingearbeiteten Schnitten exakt gegenüberliegend positioniert und dann relativ zu dem mit den Schnitten versehenen Ausgangmaterial in die eingetragene Stoßrichtung bewegt werden. Die Sägeblätter 7 werden an den Schnitten entlang vorwärts bewegt. Sie weisen den Schneidmessern 5 vergleichbar ebenfalls in Stoßrichtung an ihren vorragenden Enden eine Spitze auf, von der aus eine Sägezahnreihe 8 in Bezug auf die Stoßrichtung geneigt entgegen der Stoßrichtung abfällt, vergleichbar der Schneidkante 6. Die Wirkung der Sägeblätter 7 ist in erster Näherung einer Stichsäge vergleichbar, allerdings genügt aufgrund der geneigten Sägezahnreihe eine in Stoßrichtung wirkende Kraft, um von der jeweiligen Sägeblattspitze aus fortschreitend den zuvor erzeugten Schnitt durch einen Sägeprozess in Richtung auf jeweils einen nächstbenachbarten Verbindungssteg 2 oder von diesem weg fortschreitend zu verbreitern. Bei dem Sägen wird die Materialschwächung 3 entsprechend der Dicke der Sägeblätter 7, insbesondere der Sägezahnreihen 8, verbreitert.

Die Schneidmesser 5 weisen eine Breite von vorzugsweise wenigstens 300 µm und vorzugsweise höchstens 800 µm auf. Die Sägeblätter 7 weisen vorzugsweise eine größere Breite von bevorzugt wenigstens 400 µm und bevorzugt höchstens 2 mm auf.

In Figur 11 ist ein Stegpräger 9 abgebildet, mit dem einer der Stege 2 nach dem Trennprozess komprimiert und dadurch verdichtet werden kann, so dass sich der Querschnitt des betreffenden Stegs 2 dauerhaft bleibend verringert. Der Stegpräger 9 weist an einer Unterseite 10, mit der er bei der Kompression gegen den Steg 2 drückt, eine zentrale Ausnehmung 11 auf. Die Ausnehmung 11 ist halbzylindrisch, im Ausführungsbeispiel halbkreiszylindrisch, und erstreckt sich über die gesamte Unterseite 10. In der Ausnehmung 11 kommt am Ende des Verdichtungshubs der verdichtete Steg 2 zu liegen. Die Stege 2 werden jeweils mittels zwei Stegprägern 9 komprimiert, von denen der eine der Oberseite und der andere der Unterseite der Verstärkungsstruktur 1, 2 zugewandt gegenüberliegt. Die Stegpräger 9 werden paarweise aufeinander zu bewegt, gegebenenfalls kann der eine der Stegpräger 9 ruhen, während nur der andere bewegt wird, bis der betreffende Steg 2 auf die gewünschte Endform verdichtet ist. Die Bewegungsrichtung des Stegprägers 9 ist mit einem Richtungspfeil angedeutet. In einer bevorzugten Ausführung ragen von einem Prägewerkzeug Stegpräger 9 in einer Anzahl und einer Anordnung ab, die der Anzahl und Anordnung der zu verdichtenden Stege 2 entspricht. Der anderen Seite der durch das Schneiden und Sägen erzeugten Verstärkungsvorstruktur zugewandt ist ein weiteres solches Prägewerkzeug angeordnet. Die Stegpräger 9 weisen jeweils eine Dicke auf, die der Länge der Stege 2 zumindest im Wesentlichen entspricht.

Figur 12 zeigt eines der Trennelemente 5. Das Trennelement 5 besteht aus drei Trennarmen, die in Figur 12 jeweils von einem Schneidmesser 5 gebildet werden. Die Trennarme ragen von einem gemeinsamen Zentrum aus radial nach außen und stehen zueinander paarweise in einem Winkel von 120°. Bei der Hubbewegung des mit den Trennelementen 5 bestückten Trennwerkzeugs stechen die sternförmigen Trennelemente 5 mit ihren im jeweiligen Zentrum gelegenen Spitzen voran und den Schneiden 6 folgend durch das Basismaterial.

Figur 13 zeigt ein aus mehreren Sägeblättern 7 gebildetes Trennelement 7, das in der Draufsicht dem Trennelement 5 der Figur 12 entsprechend geformt ist. Die Trennelemente 7 sind an einem Träger der Anordnung der Trennelemente 5 an deren Träger entsprechend angeordnet, so dass sie bei entsprechender Positionierung des mit den Trennelementen 7 bestückten Trägers in die mit den Trennelementen 5 zuvor geschaffenen Durchgänge einfahren können.

Bei den Trennwerkzeugen 21, 22 und 23 (Figur 3) kann es sich jeweils insbesondere um ein Trennelemente 5 oder stattdessen Trennelemente 7 aufweisendes Trennwerkzeug handeln. In den Figuren 3 bis 5 sind die Trennelemente nur beispielhaft mit 5 bezeichnet.

Figur 14 zeigt einen Kopfpräger 12, mittels dem eine der Materialinseln 1R oder 1D an ihrer Oberseite und/oder Unterseite durch Kompression verdichtet wird, wobei die Verdichtung in erster Linie längs der durch das Trennen erhaltenen Ränder 4 stattfindet und dort in erster Linie eine Verrundung des betreffenden Rands 4 verursacht. Der Kopfpräger 12 weist an seiner der Verstärkungsstruktur 1, 2 zugewandten Unterseite einen Hohlraum 13 auf. Der Hohlraum 13 ist wannenförmig. Er nimmt bei der Kompression die Ober- oder Unterseite einer der Materialinseln 1 auf. Der Hohlraum 13 läuft an seinem Umfangsrand 14 in einer Rundung aus, deren Form der für die Ränder der Materialinseln 1 gewünschten Rundung entspricht. Der Oberseite und/oder der Unterseite der Verstärkungsstruktur zugewandt ist (jeweils) ein Prägewerkzeug angeordnet, das mit einer der Anzahl und Form der Materialinseln 1 entsprechenden Anzahl von Kopfprägern 12 bestückt ist. Die Materialinseln 1R oder 1D werden bei diesem Prägeschritt zwischen den Kopfprägern 12 der beiden Werkzeuge komprimiert und dadurch oberflächennah zumindest im Bereich der Ränder 4 verdichtet.

### Bezugszeichen

- 1: Materialinsel
- 1D: Basispolygon, Dreieck
- 1R: Basispolygon, Rhombus
- 1H: zusammengesetztes Polygon, Hexagon
- 2: Steg
- 3: Materialschwächung
- 3a: Materialschwächung, erste Gruppe
- 3b: Materialschwächung, zweite Gruppe
- 3c: Materialschwächung, dritte Gruppe
- 4: Rand
- 5: Schneidmesser
- 6: Schneidkante
- 7: Säge
- 8: Sägezahnreihe
- 9: Stegpräger
- 10: Stegpräger-Unterseite
- 11: Stegpräger-Ausnehmung
- 12: Kopfpräger
- 13: Hohlraum
- 14: Umfangsrand
- 15: Deckschicht
- 16: Deckschicht
- 17: Verbindungsmasse
- 18: -
- 19: -
- 20: Trennwerkzeug
- 21: Trennwerkzeug
- 22: Trennwerkzeug
- 23: -
- 24: -
- 25: Träger
- 26: Träger
- 27: Träger

- B: Breite

## Patentansprüche

1. Verstärkungsstruktur aus einem flächenhaften, zellulären Basismaterial, das in einer Draufsicht über seine Fläche verteilt Materialschwächungen (3) aufweist, die das Basismaterial in eine Vielzahl von durch die Materialschwächungen (3) voneinander abgegrenzten, aber noch miteinander verbundenen Materialinseln (1R; 1D) unterteilen, wobei
(a) die Materialinseln (1R; 1D) in der Draufsicht konvexe Basispolygone sind,
(b) jeweils mehrere der Materialinseln (1R; 1D) in der Draufsicht gemeinsam ein konvexes, vorzugsweise reguläres, zusammengesetztes Polygon (1H) bilden und
(c) sich die zusammengesetzten Polygone (1H) nach der Zahl der Ecken und/oder einem Verhältnis der Seitenlängen von den die Materialinseln (1R; 1D) bildenden Basispolygonen unterscheiden
**dadurch gekennzeichnet, dass**
(d) die Materialinseln (1R; 1D) Rhomben (1R) oder gleichseitige Dreiecke (1D) sind und das jeweils zusammengesetzte Polygon (1H) ein regelmäßiges Hexagon ist,
(e) wobei jeweils sechs der Dreiecke (1D) gemeinsam ein zusammengesetztes hexagonales Polygon (1H) bilden.

2. Verstärkungsstruktur nach dem vorhergehenden Anspruch, wobei sich die Materialschwächungen (3) oder nur eine Untermenge der Materialschwächungen (3), vorzugsweise die in den zusammengesetzten Polygonen (1H) erstreckten Materialschwächungen (3), in jeweils einer streifenförmigen Vertiefung erstrecken, längs der das zelluläre Basismaterial eine größere Dichte als im restlichen Bereich der Materialinseln (1R; 1D) aufweist.

3. Verstärkungsstruktur nach wenigstens einem der vorhergehenden Ansprüche, wobei sich an der Oberfläche der Materialinseln (1R) oder nur einer Untermenge der Materialinseln (1R) jeweils eine oder mehrere streifenförmige Vertiefungen erstrecken, wobei sich die streifenförmigen Vertiefungen vorzugsweise bis jeweils zu einer der Materialschwächungen (3) erstrecken.

4. Verstärkungsstruktur nach wenigstens einem der vorhergehenden Ansprüche, wobei zwischen benachbarten Materialschwächungen (3) Stege (2) verbleiben, die benachbarte Materialinseln (1R; 1D) miteinander verbinden, wobei in bevorzugter Ausführung eine Querschnittsfläche der Stege (2) komprimiert und dadurch im Vergleich zu den Materialinseln (1R; ld) in Dickenrichtung der Verstärkungsstruktur verringert ist.

5. Verstärkungsstruktur aus einem flächenhaften, zellulären Basismaterial, das in einer Draufsicht über seine Fläche verteilt Materialschwächungen (3) aufweist, die das Basismaterial in eine Vielzahl von durch die Materialschwächungen (3) voneinander abgegrenzten, aber noch miteinander verbundenen Materialinseln (1R; 1D) unterteilen, wobei
(a) die Materialinseln (1R; 1D) in der Draufsicht Rhomben (1R) oder gleichseitige Dreiecke (1D) sind
(b) und jeweils mehrere der Materialinseln (1R; 1D) in der Draufsicht gemeinsam ein regelmäßiges Hexagon (1H) bilden,
(c) wobei jeweils sechs der Dreiecke (1D) gemeinsam ein zusammengesetztes hexagonales Polygon (1H) bilden.

6. Verfahren zur Herstellung einer dreidimensional verformbaren, flächenhaften Verstärkungsstruktur, bei dem
(a) in ein flächenhaftes zelluläres Basismaterial über die Fläche des Basismaterials verteilt Materialschwächungen (3) eingearbeitet werden, die das Basismaterial in eine Vielzahl von durch die Materialschwächungen (3) voneinander abgegrenzten, aber noch miteinander verbundenen Materialinseln (1R; 1D) unterteilen, wobei
(b) in einem ersten Prozess eine erste Gruppe (3a) der Materialschwächungen (3) mit Trennelementen (5, 7) eingearbeitet wird, die an einem Träger (25) eines ersten Werkzeugs (20) so angeordnet sind, dass im ersten Schritt erste Materialinseln (1H) erhalten werden, und
(c) in einem weiteren, zweiten Prozess eine zweite Gruppe (3b) der Materialschwächungen (3) mit den Trennelementen (5, 7) des ersten Werkzeugs (20) oder mit Trennelementen (5, 7), die an einem Träger (26) eines weiteren, zweiten Werkzeugs (21) wie die Trennelemente (5, 7) des ersten Werkzeugs (20) angeordnet sind, eingearbeitet wird, so dass die ersten Materialinseln (1H) in zweite Materialinseln (1R), die in der Draufsicht jeweils ein konvexes Polygon bilden, unterteilt werden, wobei
(d) die zweite Gruppe (3b) der Materialschwächungen (3) relativ zur ersten Gruppe (3a) der Materialschwächungen (3) in der Draufsicht einheitlich parallel versetzt und/oder gedreht eingearbeitet wird, so dass jeweils mehrere der zweiten Materialinseln (1R) in der Draufsicht gemeinsam eine der ersten Materialinseln (1H) als ein konvexes, vorzugsweise reguläres, zusammengesetztes Polygon (1H) bilden.

7. Verfahren nach dem vorhergehenden Anspruch, bei dem in noch einem weiteren, dritten Prozess eine dritte Gruppe (3c) der Materialschwächungen (3) mit den Trennelementen (5, 7) des ersten Werkzeugs (20) oder des zweiten Werkzeugs (21) oder mit Trennelementen (5, 7), die an einem Träger (27) noch eines weiteren, dritten Werkzeugs (22) wie die Trennelemente (5, 7) des ersten Werkzeugs (20) angeordnet sind, eingearbeitet wird, so dass die zweiten Materialinseln (1R) in dritte Materialinseln (1D), die in der Draufsicht jeweils ein konvexes Polygon bilden, unterteilt werden.

8. Verfahren nach einem der zwei unmittelbar vorhergehenden Ansprüche, bei dem in jedem der zusammengesetzten Polygone (1H) oder wenigstens in einer Untermenge der zusammengesetzten Polygone (1H) jeweils eine oder mehrere streifenförmige Vertiefungen durch Prägen erzeugt werden.

9. Verfahren nach dem vorhergehenden Anspruch, wobei sich die eine oder die mehreren Vertiefungen jeweils bis in eine der Materialschwächungen (3) erstrecken.

10. Verfahren nach einem der zwei unmittelbar vorhergehenden Ansprüche, bei dem sich in den zusammengesetzten Polygonen (1H) oder in wenigstens der Untermenge der zusammengesetzten Polygone (1H) jeweils mehrere der streifenförmigen Vertiefungen aus einem zentralen Polygonbereich sternförmig nach außen in Richtung auf Materialschwächungen (3), die das jeweilige zusammengesetzte Polygon (1H) begrenzen, erstrecken.

11. Verfahren nach wenigstens einem der vorhergehenden Ansprüche, wobei der erste Trennprozess und/oder der zweite Trennprozess und/oder der dritte Trennprozess ein Schneiden und/oder Sägen und/oder Punktieren beinhaltet oder beinhalten, wobei das Schneiden vorzugsweise ein Stechen beinhaltet und/oder das Sägen vorzugsweise ein Stichsägen beinhaltet.

12. Verstärkungsstruktur nach wenigstens einem der Ansprüche 1 bis 5 und hergestellt nach wenigstens einem der Ansprüche 6 bis 11.

13. Composite, umfassend:
(a) eine Deckschicht (15),
(b) eine Verstärkungsstruktur nach einem der vorhergehenden Ansprüche,
(c) und eine die Deckschicht (15) und die Verstärkungsstruktur stoffschlüssig verbindende Verbindungsmasse (17), die die Verstärkungsstruktur im Bereich der Materialschwächungen (3) durchsetzt.

14. Composite nach dem vorhergehenden Anspruch, das eine weitere Deckschicht (16) umfasst, wobei die Verstärkungsstruktur zwischen den Deckschichten (15, 16) angeordnet ist und die Verbindungsmasse (17) die Verstärkungsstruktur durchsetzend die Deckschichten (15, 16) stoffschlüssig verbindet.

## Claims

1. A reinforcing structure made of a sheet-like cellular base material which comprises material attenuations (3) in a distribution over its area in a view from above, wherein the material attenuations (3) sub-divide the base material into a multitude of material islands (1R; IT) which are delineated from each other by the material attenuations (3) but are still connected to each other, wherein
(a) the material islands (1R; 1T) are convex base polygons in a view from above;
(b) a respective plurality of the material islands (1R; IT) jointly form a convex and preferably regular compound polygon (1H) in a view from above; and
(c) the compound polygons (1H) differ, in their number of corners and/or in a ratio of the lengths of their sides, from the base polygons which form the material islands (1R; IT),
**characterised in that**
(d) the material islands (1R; 1T) are rhombi (1R) or equilateral triangles (IT), and the respective compound polygon (1H) is a regular hexagon,
(e) wherein six of the respective triangles (1T) jointly form a compound hexagonal polygon (1H).

2. The reinforcing structure according to the preceding claim, wherein the material attenuations (3) or only a subset of the material attenuations (3), preferably the material attenuations (3) extending in the compound polygons (1H), each extend in a strip-shaped depression along which the cellular base material exhibits a greater density than in the remaining region of the material islands (1R; IT).

3. The reinforcing structure according to at least one of the preceding claims, wherein one or more strip-shaped depressions extend(s) (respectively) on the surface of the material islands (1R) or on the surface of only a subset of the material islands (1R).

4. The reinforcing structure according to at least one of the preceding claims, wherein bridges (2) which connect adjacent material islands (1R; IT) to each other remain between adjacent material attenuations (3), wherein in a preferred embodiment, a cross-sectional area of the bridges (2) is compressed and thereby reduced as compared to the material islands (1R; 1T) in the thickness direction of the reinforcing structure.

5. A reinforcing structure made of a sheet-like cellular base material which comprises material attenuations (3) in a distribution over its area in a view from above, wherein the material attenuations (3) sub-divide the base material into a multitude of material islands (1R; IT) which are delineated from each other by the material attenuations (3) but are still connected to each other, wherein
(a) the material islands (1R; IT) are rhombi (1R) or equilateral triangles (1T) in a view from above,
(b) and a respective plurality of the material islands (1R; IT) jointly form a regular hexagon (1H) in a view from above,
(c) wherein six of the respective triangles (1T) jointly form a compound hexagonal polygon (1H).

6. A method for manufacturing a three-dimensionally deformable, sheet-like reinforcing structure, wherein
(a) material attenuations (3) are incorporated into a sheet-like cellular base material in a distribution over the area of the base material, wherein the material attenuations (3) sub-divide the base material into a multitude of material islands (1R; 1T) which are delineated from each other by the material attenuations (3) but are still connected to each other, wherein
(b) in a first process, a first group (3a) of material attenuations (3) are incorporated using separating elements (5, 7) which are arranged on a support (25) of a first tool (20) such that first material islands (1H) are obtained in the first process, and
(c) a second group (3b) of material attenuations (3) are incorporated in a subsequent second process using the separating elements (5, 7) of the first tool (20) or using separating elements (5, 7) which are arranged on a support (26) of another, second tool (21) in the same way as the separating elements (5, 7) of the first tool (20), such that the first material islands (1H) are sub-divided into second material islands (1R) which each form a convex polygon in the a view from above, wherein
(d) the second group (3b) of material attenuations (3) are incorporated such that they are uniformly offset in parallel and/or rotated relative to the first group (3a) of material attenuations (3) in a view from above, such that a respective plurality of the second material islands (1R) jointly form one of the first material islands (1H) as a convex and preferably regular compound polygon (1H) in a view from above.

7. The method according to the preceding claim, wherein a third group (3c) of material attenuations (3) are incorporated in yet another, third process using the separating elements (5, 7) of the first tool (20) or second tool (21) or using separating elements (5, 7) which are arranged on a support (27) of yet another, third tool (22) in the same way as the separating elements (5, 7) of the first tool (20), such that the second material islands (1R) are sub-divided into third material islands (1T) which each form a convex polygon in a view from above.

8. The method according to any one of the immediately preceding two claims, wherein one or more strip-shaped depressions is/are (respectively) produced by being embossed in each of the compound polygons (1H) or at least in a subset of the compound polygons (1H).

9. The method according to the preceding claim, wherein the one or more depressions (each) extend(s) up to and into one of the material attenuations (3).

10. The method according to any one of the immediately preceding two claims, wherein a respective plurality of the strip-shaped depressions extend, in the compound polygons (1H) or in at least the subset of compound polygons (1H), from a central polygonal region outwards in the shape of a star towards material attenuations (3) which define the respective compound polygon (1H).

11. The method according to at least one of the preceding claims, wherein the first separating process and/or the second separating process and/or the third separating process involve(s) cutting and/or sawing and/or stippling, wherein said cutting preferably involves piercing and/or said sawing preferably involves a jigsaw.

12. The reinforcing structure according to at least one of Claims 1 to 5, manufactured in accordance with at least one of Claim 6 to 11.

13. A composite, comprising:
(a) a cover layer (15);
(b) a reinforcing structure according to any one of the preceding claims;
(c) and a bonding compound (17) which connects the cover layer (15) and the reinforcing structure in a material bond and permeates the reinforcing structure in the region of the material attenuations (3).

14. The composite according to the preceding claim, comprising another cover layer (16), wherein the reinforcing structure is arranged between the cover layers (15, 16), and the bonding compound (17) permeates the reinforcing structure and connects the cover layers (15, 16) in a material bond.

## Revendications

1. Structure de renforcement en matériau de base cellulaire en feuille, qui présente en vue de dessus des affaiblissements de matière (3) répartis sur sa surface et qui divisent le matériau de base en une pluralité d'îlots de matière (1R ; 1D) délimités les uns des autres par les affaiblissements de matière (3) mais encore reliés les uns aux autres, dans laquelle
(a) les îlots de matière (1R ; 1D) en vue de dessus sont des polygones de base convexes,
(b) respectivement plusieurs des îlots de matière (1R ; 1D) forment conjointement en vue de dessus un polygone (1H) composé de manière convexe, de préférence régulier, et
(c) les polygones composés (1H) se distinguent par le nombre d'angles et/ou par un rapport des longueurs des côtés des polygones de base formant les îlots de matière (1R ; 1D),
**caractérisée en ce que**
(d) les îlots de matière (1R ; 1D) sont des losanges (1R) ou des triangles équilatéraux (1D) et le polygone respectivement composé (1H) est un hexagone régulier,
(e) dans lequel respectivement six des triangles (1D) forment conjointement un polygone hexagonale composé (1H).

2. Structure de renforcement selon la revendication précédente, dans laquelle les affaiblissements de matière (3) ou seulement un sous-ensemble des affaiblissements de matière (3), de préférence les affaiblissements de matière (3) qui s'étendent dans les polygones composés (1H), s'étendent respectivement dans une cavité en forme de bande, le long de laquelle le matériau de base cellulaire présente une épaisseur plus grande que dans le reste de la zone des îlots de matière (1R ; 1D).

3. Structure de renforcement selon au moins une des revendications précédentes, dans laquelle, sur la surface des îlots de matière (1R) ou seulement un sous-ensemble des îlots de matière (1R), s'étendent respectivement une ou plusieurs cavités en forme de bande, les cavités en forme de bandes s'étendant de préférence jusqu'à respectivement un des affaiblissements de matière (3).

4. Structure de renforcement selon au moins une des revendications précédentes, dans laquelle entre des affaiblissements de matière (3) adjacents, restent des traverses (2) qui relient des îlots de matière adjacents (1R ; 1D) les uns aux autres, dans laquelle, dans une réalisation préférée, une surface en coupe transversale des traverses (2) est comprimée et ainsi, comparée aux îlots de matière (1R ; 1D), est réduite dans le sens de l'épaisseur de la structure de renforcement.

5. Structure de renforcement en matériau de base cellulaire en feuille qui présente en vue de dessus des affaiblissements de matière (3) répartis sur sa surface et qui divisent le matériau de base en une pluralité d'îlots de matière délimités les uns des autres par les affaiblissements de matière (3), mais encore reliés les uns aux autres, dans laquelle
(a) les îlots de matière (1R ; 1D) en vue de dessus sont des losanges (1R) ou des triangles équilatéraux (1D)
(b) et respectivement plusieurs des îlots de matière (1R ; 1D) en vue de dessus forment conjointement un hexagone régulier (1H),
(c) dans laquelle respectivement six des triangles (1D) forment conjointement un polygone hexagonal composé (1H).

6. Procédé de fabrication d'une structure de renforcement en feuille, déformable, tridimensionnelle dans lequel,
(a) dans un matériau de base cellulaire en feuille, sont incorporés et répartis sur la surface du matériau de base, des affaiblissements de matière (3) qui divisent le matériau de base en une pluralité d'îlots de matière (1R ; 1D) délimités les uns des autres par les affaiblissements de matière (3), mais encore reliés les uns aux autres, dans lequel
(b) dans un premier processus, un premier groupe (3a) d'affaiblissements de matière (3) est incorporé avec des éléments de séparation (5, 7) qui sont disposés sur un support (25) d'un premier outil (20) de telle sorte qu'on obtient, dans la première étape, des premiers îlots de matière (1H) et
(c) dans un deuxième processus supplémentaire, un deuxième groupe (3b) d'affaiblissements de matière (3) est incorporé avec les éléments de séparation (5, 7) du premier outil (20) ou avec des éléments de séparation (5, 7), qui sont disposés sur un support (26) d'un deuxième outil supplémentaire (21) comme les éléments de séparation (5, 7) du premier outil (20), de telle sorte que les premiers îlots de matière (1H) sont divisés en deuxièmes îlots de matière (1R) qui forment respectivement en vue de dessus un polygone convexe, dans lequel
(d) le deuxième groupe (3b) d'affaiblissements de matière (3) est en vue de dessus incorporé de manière décalée et/ou tourné parallèlement de manière homogène par rapport au premier groupe (3a) d'affaiblissements de matière (3) de telle sorte que, respectivement, plusieurs des deuxièmes îlots de matière (1R) forment conjointement en vue de dessus un des premiers îlots de matière (1H) sous la forme d'un polygone (1H) composé de manière convexe, de préférence régulier.

7. Procédé selon la revendication précédente dans lequel, dans encore un troisième processus supplémentaire, un troisième groupe (3c) d'affaiblissements de matière (3) est incorporé avec les éléments de séparation (5, 7) du premier outil (20) ou du deuxième outil (21) ou avec des éléments de séparation (5, 7), qui sont disposés sur un support (27) d'encore un troisième outil supplémentaire (22) comme les éléments de séparation (5, 7) du premier outil (20) de telle sorte que les deuxièmes îlots de matière (1R) sont divisés en troisièmes îlots de matière (1D), qui forment respectivement en vue de dessus un polygone convexe.

8. Procédé selon une des deux revendications immédiatement précédentes, dans lequel, dans chacun des polygones composés (1H) ou au moins dans un sous-ensemble de polygones composés (1H), respectivement une ou plusieurs cavités en forme de bande sont produites par nervurage.

9. Procédé selon la revendication précédente, dans laquelle l'une ou les plusieurs cavités s'étendent respectivement jusqu'à un des affaiblissements de matière (3).

10. Procédé selon une des deux revendications immédiatement précédentes, dans lequel, dans les polygones composés (1H) ou dans au moins le sous-ensemble de polygones composés (1H), respectivement plusieurs des cavités en forme de bandes s'étendent depuis une zone de polygone centrale en forme d'étoile vers l'extérieur en direction des affaiblissements de matière (3) qui délimitent le polygone composé respectif (1H).

11. Procédé selon au moins une des revendications précédentes, dans lequel le premier processus de séparation et/ou le deuxième processus de séparation et/ou le troisième processus de séparation contient ou contiennent un découpage et/ou un sciage et/ou un perçage, dans lequel le découpage contient de préférence un piquage et/ou le sciage contient de préférence un sciage par zone.

12. Structure de renforcement selon au moins une des revendications 1 à 5 et fabriquée selon au moins une des revendications 6 à 11.

13. Composite, comprenant :
(a) une couche de recouvrement (15),
(b) une structure de renforcement selon une des revendications précédentes,
(c) et une masse de liaison (17), qui relie par liaison de matière la couche de recouvrement (15) et la structure de renforcement et pénètre dans la structure de renforcement au niveau des affaiblissements de matière (3).

14. Composite selon la revendication précédente qui comprend une autre couche de recouvrement (16), dans lequel la structure de renforcement est disposée entre les couches de recouvrement (15, 16) et la masse de liaison (17) relie par liaison de matière la structure de renforcement en pénétrant dans les couches des recouvrement (15, 16).
